# EUROPÄISCHE PATENTANMELDUNG

(11) **EP 1 034 726 A1**
(43) Veröffentlichungstag der Anmeldung: **13.09.2000**
(21) Anmeldenummer: 99810206.5
(22) Anmeldetag: 09.03.1999
(51) Int. Cl.: A47C 23/06

(54) **Verfahren zum Verbinden eines Verankerungsteils aus Kunststoff mit einem Bauteil aus Holz, Verankerungsteil, Verbindungsteil sowie Lattenuntermatratze**

(71) Anmelder: Recticel Bedding (Schweiz) GmbH, 6233 Büron/LU (CH)
(72) Erfinder: Eglin, Thomas, 5013 Niedergösgen (CH)
(74) Vertreter: Wagner, Wolfgang, Dr. Phil., Dipl.-Phys.

(57) **Zusammenfassung**

Ein bolzenförmiges Verankerungsteil (9) aus Kunststoff, z. B. Acetylnitril-Butadien-Styrol oder Polyamid mit einem Füllstoff, z. B. Glasfasern wird in einem hölzernen oder als Hohlkörper aus faserverstärktem Kunststoff ausgebildeten Längsholm (2a) eines Grundrahmens einer Lattenuntermatratze verankert, indem eine Kontaktfläche (10), welche einen zentralen Dorn (11) trägt, mit z. B. 2 kN bis 5 kN gegen dessen Oberfläche gepresst wird, so dass der Dorn (11) etwas eindringt. Nach ca. 0,5 sec wird dem Verankerungsteil (9) ausserdem eine Ultraschallschwingung aufgeprägt, so dass die Spitze des Dorns (11) anschmilzt, während derselbe weiter in den Längsholm (2a) eingetrieben wird, bis der ihn umgebende ebene Teil der Kontaktfläche (10) an dessen Oberfläche anliegt. Dann - nach ca. 1,5 sec bis 5 sec - wird die Ultraschallschwingung abgestellt, während die Kraft noch während weiterer 2 sec bis 5 sec - bis zum Wiedererstarren des Dorns (11) - aufrechterhalten wird. Durch Aufstecken zweier Buchsen (12) auf zwei Verankerungsteile (9) wird ein Verbindungsteil (8) hergestellt mit zwei verbundenen Taschen (14) zur Aufnahme der Enden von Latten (7), welche Taschen mit den Buchsen (12) über federnde Laschen (13) verbunden sind.

## Beschreibung

### Technisches Gebiet

Die Erfindung betrifft ein Verfahren zum Verbinden eines Verankerungsteils mit einem Bauteil gemäss dem Oberbegriff des Anspruchs 1, ein Verankerungsteil zur Verwendung im besagten Verfahren, ein Verbindungsteil sowie eine Lattenuntermatratze.

### Stand der Technik

Es ist seit längerem bekannt, im wesentlichen aus Kunststoff bestehende Verankerungsteile mit Bauteilen aus Holz auf einfache Weise zu verbinden, indem eine ebene Kontaktfläche des Verankerungsteils gegen die Oberfläche des Bauteils gedrückt und, insbesondere durch Anwendung von Ultraschall, das Verankerungsteil dort aufgeheizt wird. Dadurch wird entweder eine Lackschicht des Bauteils verflüssigt und verbindet sich mit dem Verankerungsteil oder das letztere wird an der Kontaktfläche angeschmolzen und verschweisst unmittelbar mit der Oberfläche des Bauteils, indem etwas geschmolzener Kunststoff in Poren an der Oberfläche desselben eindringt. In beiden Fällen erhält man nur eine verhältnismässig schwache Verbindung zwischen den beiden Teilen, die grösserer mechanischer Belastung nicht standhält. Insbesondere genügt sie den Anforderungen nicht, die an Verbindungen zwischen den Latten und dem Rahmen einer Lattenuntermatratze zu stellen sind.

Der Erfindung liegt die Aufgabe zu Grunde, das bekannte gattungsgemässe Verfahren bezüglich der mechanischen Belastbarkeit der Verbindung zu verbessern. Diese Aufgabe wird durch die Merkmale im kennzeichnenden Teil des Anspruchs 1 gelöst.

Darüberhinaus soll ein für das erfindungsgemässe Verfahren besonders geeignetes Verankerungsteil angegeben werden. Diese Aufgabe wird durch die Merkmale des Anspruchs 7 gelöst.

Weiter soll ein Verbindungselement angegeben werden, das zur Herstellung von Verbindungen zwischen einem Bauteil und einem weiteren Bauteil unter Einsatz des erfindungsgemässen Verfahrens besonders geeignet ist. Diese Aufgabe wird durch die Merkmale des Anspruchs 17 gelöst.

Schliesslich soll eine Lattenuntermatratze angegeben werden, bei welcher die Verbindung zwischen den Latten und dem Rahmen mit geringem Aufwand herstellbar und zugleich mechanisch belastbar und zuverlässig ist. Diese Aufgabe wird durch die Merkmale des Anspruchs 21 gelöst.

### Darstellung der Erfindung

Die Erfindung, wie sie in den Ansprüchen gekennzeichnet ist, schafft ein Verfahren zur Verbindung eines im wesentlichen aus Kunststoff bestehenden Verankerungsteils mit einem aus einem Trägermaterial bestehenden Bauteil, welches bezüglich der Einfachheit der Durchführung dem bekannten gattungsgemässen Verfahren entspricht, jedoch eine wesentlich grössere mechanische Belastbarkeit der Verbindung sichert.

Die Erfindung schafft ausserdem für die Ausführung des Verfahrens besonders geeignete Verankerungsteile sowie solche umfassende Verbindungsteile. Letztere eignen sich bei entsprechender Ausbildung sehr gut zur Verankerung der Enden von Latten einer Lattenuntermatratze an einem Rahmen, so dass die Erfindung auch eine rasch und einfach aufbaubare und zugleich mechanisch stabile Lattenuntermatratze umfasst.

### Kurze Beschreibung der Zeichnungen

Im folgenden wird die Erfindung anhand von Figuren, welche lediglich Ausführungsbeispiele darstellen, näher erläutert. Es zeigen
- Fig. 1: eine perspektivische Ueberblicksdarstellung einer erfindungsgemässen Lattenuntermatratze,
- Fig. 2a: einen Längsschnitt durch einen Teil der Lattenuntermatratze nach Fig. 1, etwas innerhalb eines Längsholms, mit einem Verbindungsteil gemäss einer ersten Ausführungsform,
- Fig. 2b: einen Querschnitt längs B-B in Fig. 2a,
- Fig. 2c-e: Stadien des Verfahrens zur Verbindung des Verankerungsteils mit dem Längsholm,
- Fig. 3a: einen Längsschnitt durch einen Teil der Lattenuntermatratze nach Fig. 1, etwas innerhalb eines Längsholms, mit einem Verbindungsteil gemäss einer zweiten Ausführungsform,
- Fig. 3b: einen Querschnitt längs B-B in Fig. 3a,
- Fig. 3c-e: Stadien des Verfahrens zur Verbindung des Verankerungsteils mit dem Längsholm,
- Fig. 4a: eine Seitenansicht eines Teils der Lattenuntermatratze nach Fig. 1, mit einem Verbindungsteil gemäss einer dritten Ausführungsform,
- Fig. 4b: einen Querschnitt längs B-B in Fig. 4a,
- Fig. 4c-f: Stadien des Verfahrens zur Verbindung der Verankerungsteile mit dem Lattenende und dem Längsholm,
- Fig. 5a: eine Draufsicht auf die Kontaktfläche eines Verankerungsteils gemäss einer ersten Ausführungsform,
- Fig. 5b: einen Schnitt längs B-B in Fig. 5a,
- Fig. 6a: eine Draufsicht auf die Kontaktfläche eines Verankerungsteils gemäss einer zweiten Ausführungsform,
- Fig. 6b: einen Schnitt längs B-B in Fig. 6a,
- Fig. 7a: eine Draufsicht auf die Kontaktfläche eines Verankerungsteils gemäss einer dritten Ausführungsform,
- Fig. 7b: einen Schnitt längs B-B in Fig. 7a,
- Fig. 8a: eine Draufsicht auf die Kontaktfläche eines Verankerungsteils gemäss einer vierten Ausführungsform,
- Fig. 8b: eine Seitenansicht des Verankerungsteils gemäss Fig.8a,
- Fig. 9a: eine Draufsicht auf die Kontaktfläche eines Verankerungsteils gemäss einer fünften Ausführungsform,
- Fig. 9b: einen Schnitt längs B-B in Fig. 9a,
- Fig. 10a: eine Draufsicht auf die Kontaktfläche eines Verankerungsteils gemäss einer sechsten Ausführungsform,
- Fig. 10b: einen Schnitt längs B-B in Fig. 10a,
- Fig. 11a: eine Draufsicht auf die Kontaktfläche eines Verankerungsteils gemäss einer siebten Ausführungsform,
- Fig. 11b: einen Schnitt längs B-B in Fig. 11a,
- Fig. 12a: eine Draufsicht auf die Kontaktfläche eines Verankerungsteils gemäss einer achten Ausführungsform,
- Fig. 12b: einen Schnitt längs B-B in Fig. 12a,
- Fig. 13a: eine Draufsicht auf die Kontaktfläche eines Verankerungsteils gemäss einer neunten Ausführungsform,
- Fig. 13b: eine Seitenansicht des Verankerungsteils gemäss Fig. 13a,
- Fig. 14a: eine Draufsicht auf die Kontaktfläche eines Verankerungsteils gemäss einer zehnten Ausführungsform,
- Fig. 14b: einen Schnitt längs B-B in Fig. 14a,
- Fig. 15a: eine Draufsicht auf die Kontaktfläche eines Verankerungsteils gemäss einer elften Ausführungsform,
- Fig. 15b: einen Schnitt längs B-B in Fig. 15a,
- Fig. 16a: eine Draufsicht auf die Kontaktfläche eines Verankerungsteils gemäss einer zwölften Ausführungsform,
- Fig. 16b: einen Schnitt längs B-B in Fig. 16a und
- Fig. 17: den zeitlichen Verlauf einer Anpresskraft und der Amplitude einer mechanischen Schwingung beim erfindungsgemässen Verfahren.

### Wege zur Ausführung der Erfindung

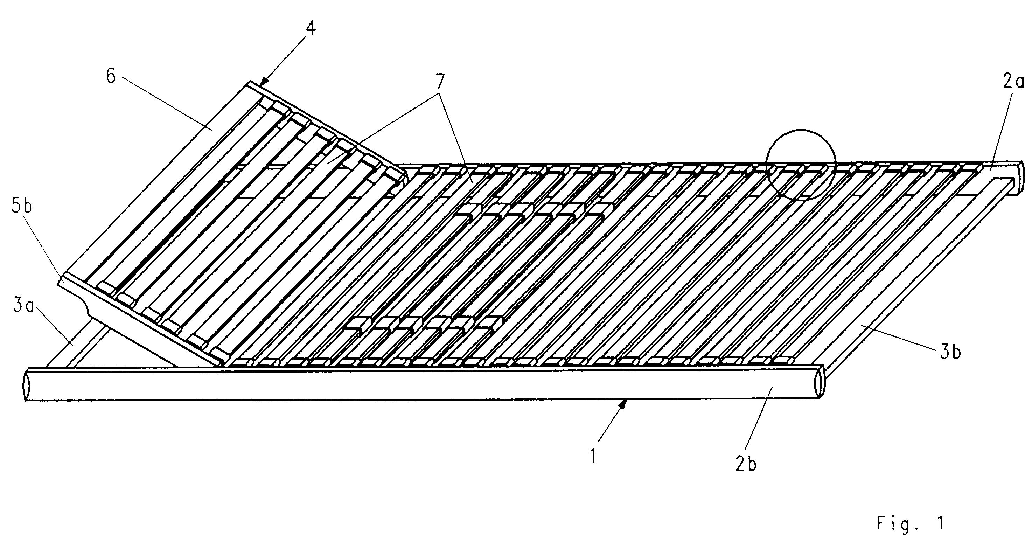

Die Erfindung, deren Anwendungsbereich allerdings wesentlich breiter ist, wird im folgenden an mehreren die Herstellung der Verbindungen zwischen den Enden der Latten und dem Rahmen einer Lattenuntermatratze betreffenden Beispielen erläutert. Die in Fig. 1 dargestellte Lattenuntermatratze weist einen Grundrahmen 1 aus zwei parallelen Längsholmen 2a,b und zwei dieselben verbindenenden Querholmen 3a,b auf.

Ein gegenüber dem Grundrahmen 1 beschränkt schwenkbarer Kopfteilrahmen 4 weist ebenfalls zwei kurze Längsholme 5a,b und einen Querholm 6 am Kopfende auf. Der Grundrahmen 1 wie der Kopfteilrahmen 4 tragen in geringen Abständen aufeinanderfolgende querverlaufende Latten 7, deren Enden jeweils mit den Längsholmen 2a,b des Grundrahmens 1 oder mit den Längsholmen 5a,b des Kopfteilrahmens 4 federnd verbunden sind.

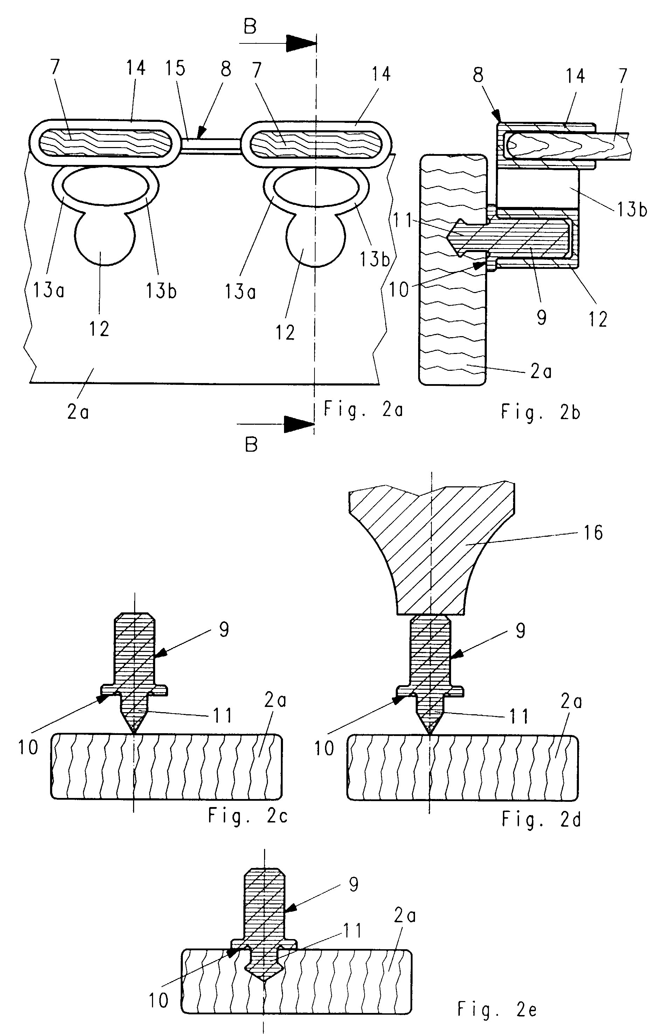

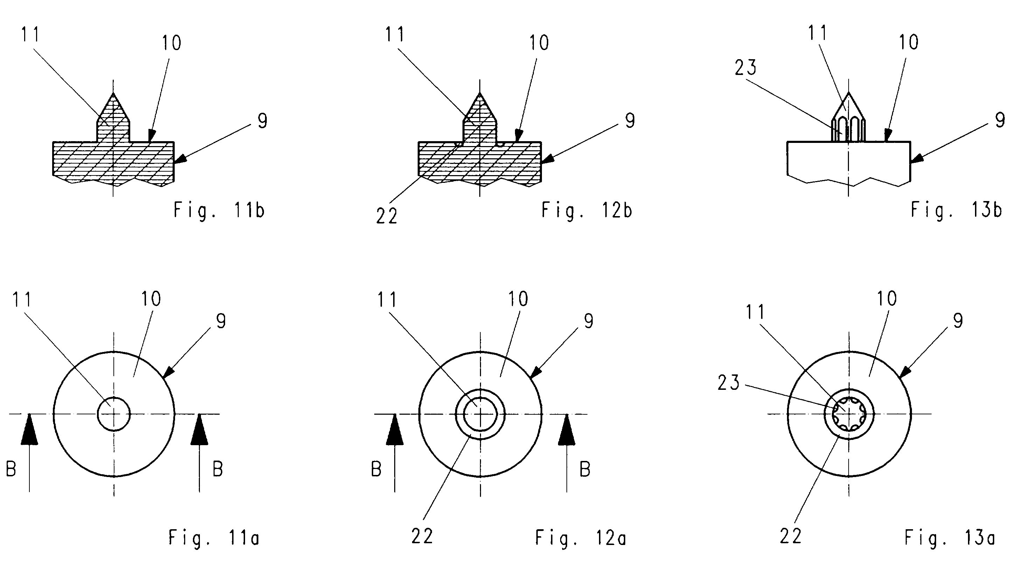

In Fig. 2a,b - sie zeigen den in Fig. 1 durch einen Kreis hervorgehobenen Bereich - ist ein Verbindungsteil 8 gemäss einer ersten Ausführungsform dargestellt. Es verbindet die Enden zweier nebeneinander angeordneter Latten 7 mit dem Längsholm 2a. Es umfasst zwei Verankerungsteile 9, welche als ungefähr zylindrische Bolzen ausgebildet sind, die jeweils an einem Ende eine zur Längsrichtung normale grundsätzlich kreisscheibenförmige Kontaktfläche 10 tragen, die in der Mitte jedoch einen in eine Spitze auslaufenden Dorn 11 bildet. Die Ausbildung der Kontaktfläche 10 wird im Zusammenhang mit Fig. 13a,b noch genauer geschildert werden. Die Verankerungsteile 9 sind jeweils mittig unterhalb der beiden Latten 7 angeordnet.

Das Verbindungsteil 8 umfasst weiterhin zwei Buchsen 12, deren jede auf eines der Verankerungsteile 9 aufgesteckt ist. Sie sind jeweils über zwei nach oben führende, konvex nach aussen gebogene federnde Laschen 13a,b mit einem Befestigungsteil verbunden, das als Tasche 14 ausgebildet ist, welche jeweils ein Ende einer Latte 7 aufnimmt. Die beiden Taschen 14 sind zur Kippstabilisierung der Latten 7 durch einen kurzen waagrechten Verbindungssteg 15 verbunden. Abgesehen von den Verankerungsteilen 9 ist das Verbindungsteil 8 einstückig ausgebildet.

Als Material für die Verbindungsteile 8 eignen sich z. B. amorphe Kunststoffe wie Polystyrol, Acetylnitril-Butadien-Styrol, Styrol-Acrylnitril, Acrylnitril-Styrol-Ethylacrylat, Styrol-Butadien-Methylmetacrylat, Polycarbonat und Polyvinylchlorid oder teilkristalline Kunststoffe wie insbesondere Polyethylen hoher oder niedriger Dichte, Polypropylen, Polyamid, Polyoximethylen und Polybutylenterephtalat. Wenigstens die Verankerungsteile 9 enthalten zur Erhöhung der Härte vorzugsweise mindestens einen Füllstoff wie z. B. Gesteinsmehl, Holzmehl, Textilfasern, Metallfasern, Glasfasern oder Kohlefasern. Die Längsholme 2a,b, 5a,b können z. B. im wesentlichen aus Holz bestehen. Dabei kann es sich um Massivholz, insbesondere Buche, Birke, Erle, Esche, Eiche, Pappel, Ulme, Fichte, Kiefer oder Tanne handeln oder auch um Schicht- oder Sperrholz, insbesondere aus Buche, Birke, Pappel oder Esche, um Leimholz, insbesondere aus Fichte, Kiefer oder Tanne, wobei die Oberfläche mit Buche, Birke oder Esche belegt sein kann, oder auch um Holzfaserplatten-, insbesondere Spanplatten-, mitteldichtes oder hartes Holzfaserplattenmaterial. Daneben können sie auch als Hohlkörper, z. B. als Rohre aus einem thermoplastischen Kunststoff wie Polyamid, Polyoximethylen, Polypropylen, Polyethylentherephthalat oder Polybutylentherephthalat ausgebildet sein, der mit Fasern, insbesondere Glasfasern, Kohlefasern oder Aramidfasern verstärkt sein kann, welche in Form von Fasern, Matten, Geweben oder Strängen in den Kunststoff eingebettet sind.

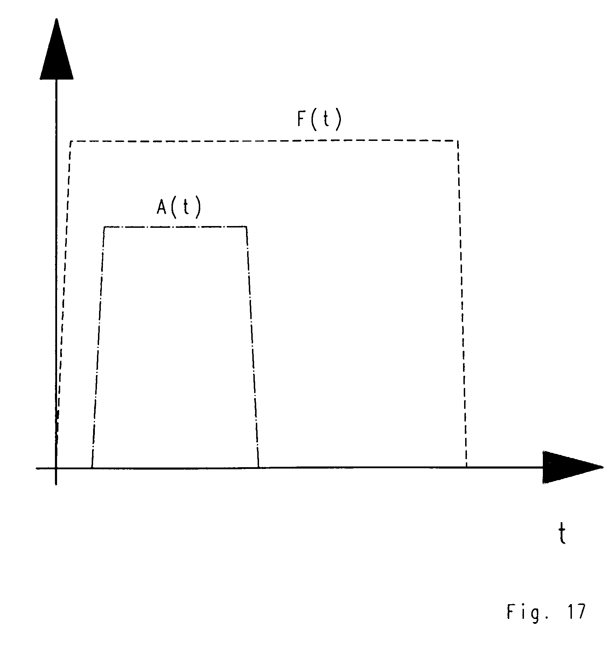

Zur Herstellung der Verbindung zwischen dem Verankerungsteil 9 und dem Längsholm 2a wird das erstere mit der Kontaktfläche 10 gegen die Innenseite des Längsholms 2a gerichtet (Fig. 2c) und mittels einer Sonotrode 16 eines Ultraschallgeräts mit einer Kraft F (Fig. 17), die je nach Ausbildung des Verankerungsteils 9 und Material des Längholms 2a vorzugsweise zwischen 2 kN und 5 kN liegt, angepresst, wobei die Spitze des Dorns 11 zwischen 1 mm und 3 mm in das Material des Längsholms 2a eindringt. Erst nach ca. 0,5 sec wird dem Verankerungsteil 9 über die Sonotrode 16 für - wiederum je nach Ausbildung des Verankerungsteils 9 und Material des Längsholms 2a - etwa 1,5 sec bis 5 sec eine mechanische Schwingung, vorzugsweise im Ultraschallbereich, z. B. mit einer Frequenz zwischen 20 kHz und 48 kHz und einer Amplitude A aufgeprägt. Dadurch wird dem Verankerungsteil 9 Energie zugeführt, welche die Spitze des Dorns 11 zum Schmelzen bringt, während derselbe weiter vorgetrieben wird, bis der den Dorn 11 umgebende ebene Teil der Kontaktfläche 10 die Oberfläche des Längsholms 2a erreicht.

Dann wird die Schwingung abgestellt, während die Kraft noch bis zum Erstarren des Dorns 11, gewöhnlich während 2 sec bis 5 sec, aufrechterhalten wird. Durch das Anschmelzen des Dorns 11 verbindet sich derselbe sehr eng mit dem Material des Längsholms 2a, da das Kunststoffmaterial in die Poren des mindestens im wesentlichen aus Holz bestehenden Materials des letzteren eindringt. Der mehrere Millimeter lange Dorn 11 ist somit fest im Längsholm 2a verankert und die Verbindung dadurch gegen Zug wie Scherung sehr widerstandsfähig. Gegen Momente ist das Verankerungsteil 9 zusätzlich durch den den Dorn 11 umgebenden kreisringförmigen Teil der Kontaktfläche 10, der an der Oberfläche des Längsholms 2a anliegt, gestützt.

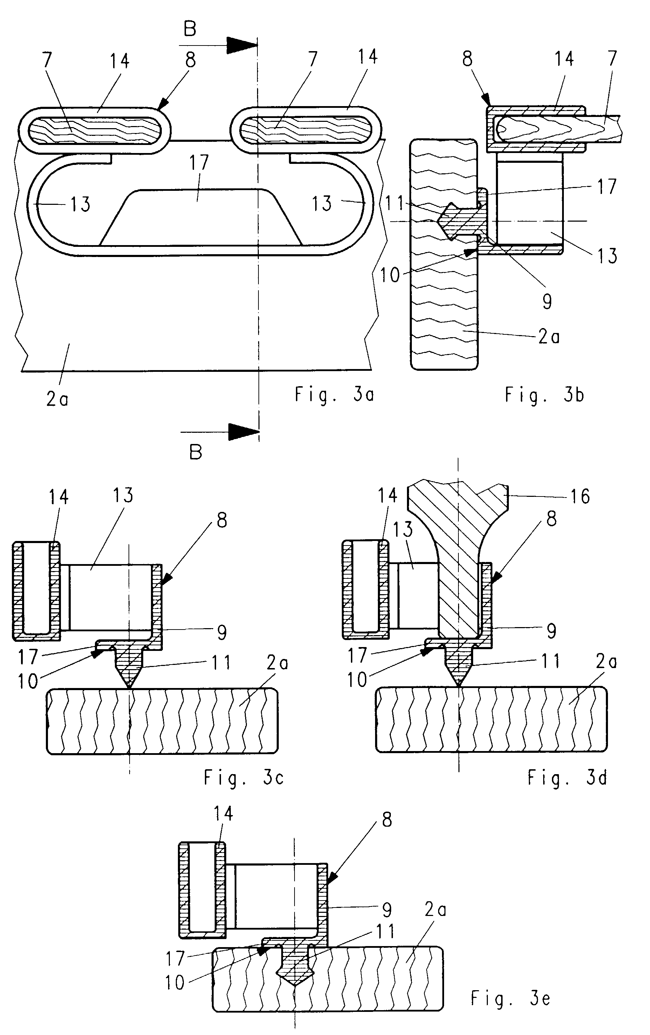

Einstückig, aber im übrigen ähnlich ist das Verbindungsteil 8 gemäss der zweiten Ausführungsform ausgebildet, wie sie in Fig. 3a,b dargestellt ist. Die zwei Verankerungsteile 9 sind hier nebeneinander in eine Grundplatte 17 integriert, die, jeweils über eine konvex nach aussen gebogene federnde Lasche 13, mit zwei Taschen 14 zur Aufnahme der Enden zweier nebeneinander angeordneter Latten 7 verbunden ist.

Die Herstellung der Verbindung (Fig. 3c-e) erfolgt im wesentlichen wie im Zusammenhang mit dem Verbindungselement gemäss der ersten Ausführungsform geschildert. Dabei werden (Fig. 3d) zwei Sonotroden 16 nebeneinander gegen die Rückseite der Grundplatte 17 gedrückt, so dass jede hinter einem der Dorne 11 ansetzt.

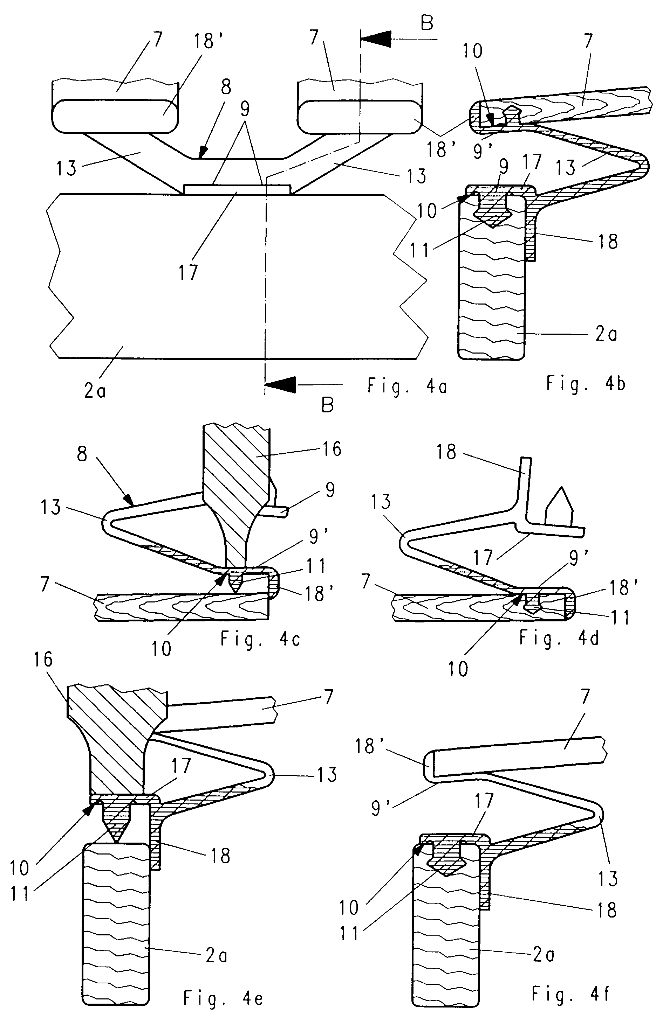

Gemäss der dritten Ausführungsform (Fig. 4a,b) ist das Verbindungsteil 8 wiederum einstückig ausgebildet. Die beiden Verankerungsteile 9 sind in eine waagrechte Grundplatte 17 integriert, derart, dass jeweils die Kontaktflächen 10 nach unten weisen und die Dorne 11 in die Oberseite des Längsholms 2a eingedrungen sind. An die Grundplatte 17 schliesst im rechten Winkel eine Anlageplatte 18 an, die an der Innenseite des Längsholms 2a anliegt und von der zwei etwa V-förmige federnde Laschen 13 ausgehen, an deren Enden jeweils ein in diesem Fall als weiteres Verankerungteil 9' ausgebildetes Befestigungsteil angeordnet ist, dessen Kontaktfläche 10 nach oben weist und mit der Unterseite des Endbereichs der Latte 7 verbunden ist, während eine anschliessende Anlageplatte 18' das Ende der Latte 7 umgreift.

Die Herstellung der Verbindungen erfolgt wiederum im wesentlichen gleich wie bereits für das Verbindungsteil gemäss der ersten und der zweiten Ausführungsform geschildert. Zuerst wird dabei die Verbindung zwischen den Latten 7 und den Verankerungsteilen 9' hergestellt, wobei die ersteren dabei unterhalb der letzteren angeordnet sind, da die Sonotrode 16 von oben her angesetzt wird (Fig. 4c).

Nach Fertigstellung der Verbindung (Fig. 4d) wird das aus dem Verbindungsteil 8 und zwei Latten 7 bestehende Teil gekehrt und zur Herstellung der Verbindung zwischen den Verankerungsteilen 9 und dem Längsholm 2a zwei Sonotroden 16 an der Rückseite der Grundplatte 17 angesetzt (Fig. 4e). Nach Herstellung dieser Verbindung sind die Latten 7 mit dem Längsholm 2a fest verbunden (Fig. 4f).

Bei allen Ausführungsformen können die Verbindungen der Verbindungsteile 8 mit einem Längsholm sowohl mit jeweils einer oder zwei Sonotroden nacheinander durchgeführt werden oder - vorzugsweise - mit einer Batterie nebeneinander angesetzter Sonotroden gleichzeitig. Bezüglich der dritten Ausführungsform des Verbindungsteils 8 gilt dies auch für die Herstellung der Verbindungen zwischen den Verbindungsteilen 8 und den Latten 7. Als Ultraschallschweissgerät kann bei allen Schritten beispielsweise das Gerät PGD 240 der Firma Branson eingesetzt werden.

Die Kontaktfläche 10 eines Verankerungsteils 9 kann auf sehr verschiedene Weisen ausgebildet sein. Sie bildet mindestens eine Erhebung, welche in eine Kante oder Spitze ausläuft und einerseits vor Einsetzen der mechanischen Schwingung unter der Einwirkung der Kraft F (Fig. 17) in das Bauteil eindringen und andererseits die durch die mechanische Schwingung auf das Verankerungsteil aufgebrachte Energie auf die Kante oder Spitze konzentrieren und ein Anschmelzen des Materials an dieser Stelle ermöglichen soll. Dadurch dringt Kunststoffschmelze aus dem Verankerungsteil in die Poren des Bauteils ein und erstarrt dann, so dass die angestrebte enge und belastbare Verbindung zwischen Verankerungsteil und Bauteil entsteht.

Die Kontaktfläche 10 ist dabei in der Regel so ausgebildet, dass neben der Erhebung oder den Erhebungen stets noch ein Abschnitt vorhanden ist, welcher der Form des Oberflächenabschnitts des Bauteils, an welchem das Verankerungsteil verankert werden soll, angepasst ist, das insbesondere eben ist und bezüglich des Vortriebs des Verankerungsteils bei der Herstellung der Verbindung desselben mit dem Bauteil als Anschlag dient. Auf diese Weise ist eine kontrollierte Endposition stets sichergestellt. Ausserdem können über den an der Oberfläche des Bauteils anliegenden Abschnitt der Kontaktfläche 10 Momente auf das Bauteil übertragen und dadurch aufgefangen werden.

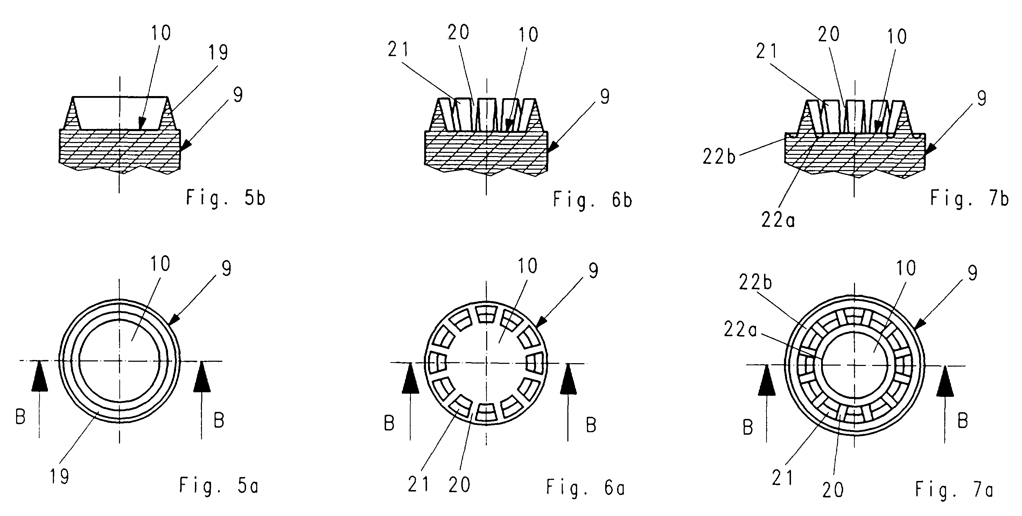

Gemäss einer ersten Ausführungsform (Fig. 5a,b) weist die Kontaktfläche 10 eine Erhebung auf, welche als umlaufender Steg 19 von dreieckigem Querschnitt ausgebildet ist, der also eine kreisförmig umlaufende Kante bildet. Die Erhebung ist zusammenhängend und daher mechanisch sehr stabil.

Gemäss einer zweiten Ausführungsform (Fig. 6a,b), die der ersten sehr ähnlich ist, ist der Steg durch radial durchgehende Unterbrechungen 20 in einzelne Zähne 21 unterteilt. Dies vergrössert die Fläche, an der das Verankerungsteil 9 eine enge Verbindung mit dem Material des Bauteils eingehen kann.

Bei einer dritten Ausführungsform (Fig. 7a,b), die im übrigen der zweiten entspricht, grenzt an den wiederum in einzelne Zähne 21 aufgelösten Steg innen und aussen je eine konzentrische Auffangrille 22a bzw. 22b an. Letztere dienen dazu, überschüssige Kunststoffschmelze, die beim Eindringen der Zähne 21 in das Material des Bauteils abgestreift wurde, aufzunehmen, so dass ein Ausfliessen von Schmelze über den Rand der Kontaktfläche 10 hinaus vermieden wird.

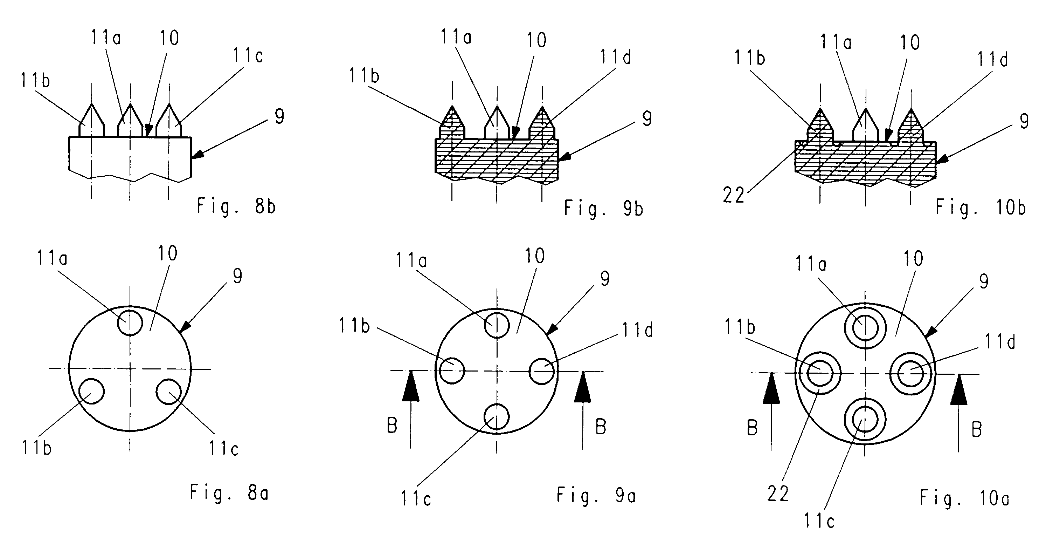

Bei einer vierten Ausführungsform (Fig. 8a,b) weist die Kontaktfläche 10 als Erhebungen drei an den Eckpunkten eines gleichseitigen Dreiecks angeordnete Dorne 11a,b,c auf, welche jeweils auf einer zylindrischen Basis einen kegelförmigen Aufsatz tragen, der also in eine Spitze ausläuft. Aehnlich sind bei einer fünften Ausführungsform (Fig. 9a,b) vier derartige Dorne 11a,b,c,d an den Eckpunkten eines Quadrats angeordnet. Bei der sonst gleichen sechsten Ausführungsform (Fig. 10a,b) ist jeder der Dorne 11a,b,c,d von einer Auffangrille 22 umgeben.

Bei einer siebten Ausführungsform (Fig. 11a,b) ist die Erhebung als einziger, verhältnismässig massiver zentraler Dorn 11 ausgebildet. Diese Ausführung bildet bei kleinem Flächenbedarf eine sehr stabile Verbindung. Bei der im übrigen gleichen achten Ausführungsform (Fig. 12a,b) ist der zentrale Dorn 11 von einer Auffangrille 22 umgeben. Die neunte Ausführungsform (Fig. 13a,b) unterscheidet sich von der achten lediglich dadurch, dass der Dorn 11 im Bereich seiner zylindrischen Basis mit parallelen Längsrillen 23 versehen ist, welche die Kontaktfläche zum umgebenden Material des Bauteils vergrössern.

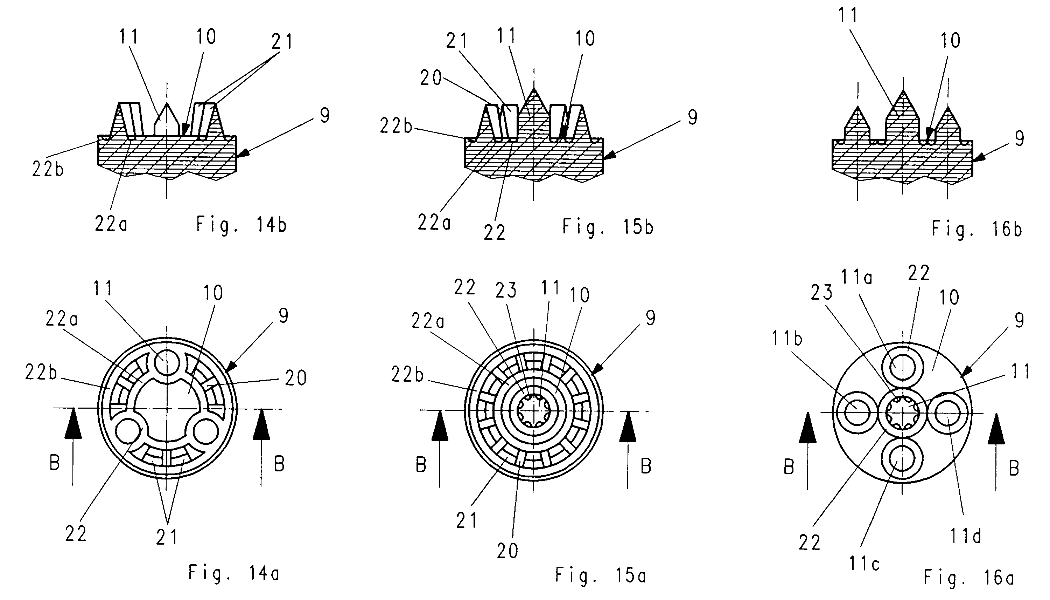

Weitere Ausführungsformen benützen Kombinationen von Merkmalen der bisher beschriebenen Typen. So weist die Kontaktfläche 10 gemäss einer zehnten Ausführungsform (Fig. 14a,b) drei an den Eckpunkten eines gleichseitigen Dreiecks angeordnete Dorne 11 auf, zwischen denen jeweils, von einer Unterbrechung 20 getrennt, zwei Zähne 21 angeordnet sind. Jeder Dorn 11 ist von einer Auffangrille 22 umgeben. Auch innerhalb und ausserhalb der Zähne 21 ist jeweils eine Auffangrille 22a bzw. 22b angeordnet. Die Auffangrillen 22, 22a,b bilden ein zusammenhängendes Netz.

Eine elfte Ausführungsform (Fig. 15a,b) verbindet die Merkmale der dritten mit denen der neunten Ausführungsform. Ein von einer Auffangrille 22 umgebener zentraler Dorn 11 mit Längsrillen 23 ist mit Abstand von einem durch Unterbrechungen 20 in einzelne Zähne 21 unterteilten Steg umgeben, an den innen und aussen konzentrische Auffangrillen 22a bzw. 22b anschliessen.

Eine zwölfte Ausführungsform (Fig. 16a,b) verbindet die Merkmale der sechsten Ausführungsform mit denen der neunten. Der von einer Auffangrille 22 umgebene, mit Längsrillen 23 versehene zentrale Dorn 11 ist von vier weiteren Dornen 11a,b,c,d umgeben, die ebenfalls jeweils von einer Auffangrille 22 umgeben sind.

### Bezugszeichenliste

- 1: Grundrahmen
- 2a,b: Längsholme
- 3a,b: Querholme
- 4: Kopfteilrahmen
- 5a,b: Längsholme
- 6: Querholm
- 7: Latten
- 8: Verbindungsteil
- 9, 9': Verankerungsteil
- 10: Kontaktfläche
- 11, 11a,b,c,d: Dorn
- 12: Buchse
- 13, 13a,b: Lasche
- 14: Tasche
- 15: Verbindungssteg
- 16: Sonotrode
- 17: Grundplatte
- 18, 18': Anlageplatte
- 19: Steg
- 20: Unterbrechung
- 21: Zahn
- 22, 22a,b: Auffangrille
- 23: Längsrille

## Patentansprüche

1. Verfahren zum Verbinden eines im wesentlichen aus Kunststoff bestehenden Verankerungsteils (9, 9') mit einem Bauteil, wobei das Verankerungsteil (9, 9') mit einer Kontaktfläche (10) gegen einen geschlossenen Oberflächenabschnitt des Bauteils gedrückt und dort aufgeheizt wird, **dadurch gekennzeichnet, dass** die Kontaktfläche (10) mindestens eine Kante oder Spitze aufweist, welche in das Bauteil eindringt.

2. Verfahren nach Anspruch 1, **dadurch gekennzeichnet, dass** die Aufheizung der Kontaktfläche (10) erst einsetzt, nachdem die Kontaktstelle (10) gegen den Oberflächenabschnitt des Bauteils gedrückt und mindestens eine Kante oder Spitze mindestens zum Teil in dasselbe eingedrungen ist.

3. Verfahren nach Anspruch 1 oder 2, **dadurch gekennzeichnet, dass** die Aufheizung der Kontaktfläche (10) erfolgt, indem mindestens ein an dieselbe anschliessender Abschnitt des Verankerungsteils (9, 9') einer mechanischen Schwingung unterworfen wird.

4. Verfahren nach Anspruch 3, **dadurch gekennzeichnet, dass** es sich bei der mechanischen Schwingung um eine Ultraschallschwingung handelt.

5. Verfahren nach einem der Ansprüche 1 bis 4, **dadurch gekennzeichnet, dass** das Verankerungsteil (9, 9') in das Bauteil eindringt, bis ein von einem Teil der Kontaktfläche (10) des ersteren gebildeter Anschlag an der Oberfläche des letzteren anliegt.

6. Verfahren nach einem der Ansprüche 1 bis 5, **dadurch gekennzeichnet, dass** das Bauteil aus Massivholz, insbesondere Buche, Birke, Erle, Esche, Eiche, Pappel, Ulme, Fichte, Kiefer oder Tanne, aus Schicht- oder Sperrholz, insbesondere aus Buche, Birke, Pappel oder Esche, aus Leimholz, insbesondere aus Fichte, Kiefer oder Tanne, wobei die Oberfläche mit Buche, Birke oder Esche belegt sein kann, besteht oder aus Holzfaserplattenmaterial, insbesondere als Spanplatten-, mitteldichtem Holzfaserplatten- oder hartem Holzfaserplattenmaterial oder auch als Hohlkörper aus thermoplastischem Kunststoff wie Polyamid, Polyoximethylen, Polypropylen, Polyethylentherephthalat oder Polybutylentherephthalat ausgebildet ist, der insbesondere mit Fasern wie Glasfasern, Kohlefasern oder Aramidfasern verstärkt ist, welche als Fasern, Matten, Gewebe oder Stränge in den Kunststoff eingebettet sind.

7. Verankerungsteil, welches im wesentlichen aus Kunststoff besteht, zur Verwendung im Verfahren nach einem der Ansprüche 1 bis 6, mit einer Kontaktfläche, welche mindestens eine Erhebung trägt, welche eine Kante oder Spitze bildet.

8. Verankerungsteil nach Anspruch 7, **dadurch gekennzeichnet, dass** die Kontaktfläche am Fuss mindestens einer Erhebung eine Vertiefung aufweist.

9. Verankerungsteil nach Anspruch 8, **dadurch gekennzeichnet, dass** die Vertiefung als die Erhebung mindestens teilweise umgebende Auffangrille (22, 22a, 22b) ausgebildet ist.

10. Verankerungsteil nach einem der Ansprüche 7 bis 9, **dadurch gekennzeichnet, dass** mindestens eine Erhebung als umlaufender geschlossener oder in einzelne Zähne (21) unterteilter Steg (19) ausgebildet ist, welcher eine durchgehende bzw. unterbrochene kreisförmige Kante bildet.

11. Verankerungsteil nach einem der Ansprüche 7 bis 10, **dadurch gekennzeichnet, dass** mindestens eine Erhebung als Dorn (11, 11a, 11b, 11c, 11d) ausgebildet ist, welcher in eine Spitze ausläuft.

12. Verankerungsteil nach Anspruch 11, **dadurch gekennzeichnet, dass** der Dorn (11) sich über mindestens einen Teil seiner Länge erstreckende seitliche Längsrillen (23) aufweist.

13. Verankerungsteil nach Anspruch 11 oder 12, **dadurch gekennzeichnet, dass** die Kontaktfläche (10) einen zentral angeordneten Dorn (11) trägt.

14. Verankerungsteil nach einem der Ansprüche 11 bis 13, **dadurch gekennzeichnet, dass** die Kontaktfläche (10) mehrere Dorne (11a, 11b, 11c, 11d) trägt, welche an den Eckpunkten eines Vielecks, insbesondere eines Dreiecks oder Vierecks angeordnet sind.

15. Verankerungsteil nach einem der Ansprüche 7 bis 14, **dadurch gekennzeichnet, dass** es als Bolzen ausgebildet ist und die Kontaktfläche (10) an einem Ende desselben angeordnet und mindestens annähernd senkrecht zu seiner Längsrichtung ausgerichtet ist.

16. Verankerungsteil nach einem der Ansprüche 7 bis 15, **dadurch gekennzeichnet, dass** der Kunststoff ein amorpher Kunststoff, insbesondere Polystyrol, Acetylnitril-Butadien-Styrol, Styrol-Acrylnitril, Acrylnitril-Styrol-Ethylacrylat, Styrol-Butadien-Methylmetacrylat, Polycarbonat oder Polyvinylchlorid oder ein teilkristalliner Kunststoff, insbesondere Polyethylen hoher oder niedriger Dichte, Polypropylen, Polyamid, Polyoximethylen oder Polybutylenterephtalat ist.

17. Verankerungsteil nach einem der Ansprüche 7 bis 16, **dadurch gekennzeichnet, dass** der Kunststoff als Füllstoff Gesteinsmehl, Holzmehl, Textilfasern, Metallfasern, Glasfasern oder Kohlefasern enthält.

18. Verbindungsteil mit mindestens einem Verankerungsteil (9) nach einem der Ansprüche 7 bis 17 sowie mindestens einem weiteren Befestigungsteil.

19. Verbindungsteil nach Anspruch 18, **dadurch gekennzeichnet, dass** mindestens ein weiteres Befestigungsteil mit dem Verankerungsteil (9) über eine federnde Lasche (13) verbunden ist.

20. Verbindungsteil nach Anspruch 18 oder 19, **dadurch gekennzeichnet, dass** mindestens ein Befestigungsteil als weiteres Verankerungsteil (9') ausgebildet ist.

21. Verbindungsteil nach Anspruch 18 oder 19, **dadurch gekennzeichnet, dass** mindestens ein Befestigungsteil als Tasche (14) ausgebildet ist.

22. Lattenuntermatratze mit einem Rahmen und mehreren mit demselben verbundenen parallelen Latten (7), deren Enden mit dem Rahmen jeweils über Verbindungsteile (8) nach einem der Ansprüche 17 bis 20 verbunden sind.
